Europäisches Patentamt

European Patent Office

Office européen des brevets

(11) Veröffentlichungsnummer: **0 308 712**
**A1**

## (12) EUROPÄISCHE PATENTANMELDUNG

(21) Anmeldenummer: 88114419.0

(22) Anmeldetag: 03.09.88

(51) Int. Cl.4: **F16C 11/10**

(30) Priorität: 21.09.87 CH 3635/87
28.01.88 CH 294/88

(43) Veröffentlichungstag der Anmeldung:
29.03.89 Patentblatt 89/13

(84) Benannte Vertragsstaaten:
**BE CH DE FR GB IT LI NL**

(71) Anmelder: **SICOMMERCE AG**
**Mutschellenstrasse 20**
**CH-8059 Zürich(CH)**

Anmelder: **Praktiek, Folkert Johan Bernard**
**Buidelmees 21**
**NL-7827 Emmen(NL)**

(72) Erfinder: **Praktiek, Folkert J. B.**
**Buidelmees 21**
**NL-7827 Emmen(NL)**

(74) Vertreter: **Klein, Ernest**
**Asea Brown Boveri AG Abteilung REI**
**CH-5401 Baden(CH)**

(54) **Feststellbares Gelenk.**

(57) Ein feststellbares Gelenk für die Verbindung von Rohren besteht im wesentlichen aus zwei identischen, mit Gleitflächen aneinanderliegenden Elementen. Es zeichnet sich dadurch aus, dass jedes Element einen zylindrischen Zapfen (1) zur Aufnahme eines Rohres (2) aufweist, sowie einen Ring (6) mit Innenverzahnung (10), wobei die Längsachse des Zapfens (1) und eine als Gleitfläche (7) ausgebildete Stirnseite des Ringes (6) in einer gemeinsamen Ebene liegen. Die beiden Elemente sind mit ihren Gleitflächen (7) aneinandergelegt und bilden eine gemeinsame Ringachse. In das Innere der beiden Ringe (6a,6b) ist eine Drehbüchse (12) mit aufgesetzter Schiebemuffe (14) eingeführt, wobei die Schiebemuffe auf der Drehbüchse mittels Gewinde (13) aufgezogen ist und mit einer Aussenverzahnung versehen ist, deren Breite höchstens der Breite der Innenverzahnung (10) eines Ringes entspricht. Diese Aussenverzahnung steht je nach axialer Stellung der Schiebemuffe (14) mit der Innenverzahnung eines Ringes (6a) oder mit jener beider Ringe (6a,6b) im Eingriff. Die beiden Ringe (6a,6b) des Gelenkes werden an ihren Gleitflächen (7a,7b) zusammengehalten über einen Verschlusszapfen (15), der an der freien Stirnseite (8b) des einen Ringes (6b) anschlägt und der in das hohle Innere der Drehbüchse (12) eingelassen ist und darin über einen in einer Ringnut der Drehbüchse (12) eingeschnappten Federring (18) axial gesichert ist.

Fig. 3

## Feststellbares Gelenk

### Gebiet der Erfindung

Die Erfindung betrifft ein feststellbares Gelenk für die Verbindung von Rohren, im wesentlichen bestehend aus zwei mit Gleitflächen aneinanderliegenden Elementen,
- wobei jedes Element einen zylindrischen Zapfen zur Aufnahme eines Rohres sowie einen Ring mit Innenverzahnung aufweist,
- und wobei in das Innere der beiden Ringe eine Schiebemuffe eingeführt ist, die mit einer Aussenverzahnung versehen ist,
- welche Aussenverzahnung je nach axialer Stellung der Schiebemuffe mit der Innenverzahnung eines Ringes oder mit jener beider Ringe im Eingriff steht.

### Stand der Technik

Ein derartiges Gelenkt ist bekannt aus der Deutschen Offenlegungsschrift 2 658 838. Die dortige, mit Aussenverzähnung versehene Schiebehülse ist auf einer zentralen Achse aufgezogen und ist federbelastet. Durch Betätigen der aus dem Gelenk herausragenden Achse in Längsrichtung gelangen die Verzahnungen ausser Eingriff, worauf eine stufenweise Winkelverstellung vorgenommen werden kann. Die beiden mit Gleitflächen, hier Schulter resp. Versatz, aneinanderliegenden Gelenkhälften bestehen aus unterschiedlichen Teilen, was sowohl die Fertigung als auch die Lagerhaltung verteuert. Wegen der herausragenden Achse ist die Gesamtbreite des Gelenkes zudem beträchtlich grösser als jene der zu verbindenen Rohre, was beispielsweise eine Wandverlegung des Rohrsystemes erschwert. Letztlich fehlt dem bekannten Gelenk ein Mittel, welches das Aneinanderliegen der beiden Gelenkhälften garantiert.

Bei einem anderen bekannten und feststellbaren Gelenk, welches nach dem gleichen Prinzip arbeitet (US-PS 4,582,445) muss zur Verstellung der beiden Gelenkteile das kraftübertragende Element axial verschoben werden. Hierbei wird zum einen die Gesamtbreite des Gelenkes verändert, zum andern ist während des Verstellens die Rohrverbindung aufgehoben.

### Darstellung der Erfindung

Der Erfindung liegt die Aufgabe zugrunde, ein kräfte- und momenteaufnehmendes Gelenk zu schaffen, welches in einem sehr grossen Winkelbereich verstellbar ist und für die Aufnahme von Rohren in mehreren Achsen erweiterbar ist. Ferner soll die Verstellung bei jeweils gleichbleibenden Aussenabmessungen des Gelenkes vor sich gehen.

Dies wird dadurch erreicht,
- dass die beiden Elemente identische Bauteile sind,
- dass die Schiebemuffe mittels eines Gewindes auf einer Drehbüchse verstellbar aufgezogen ist,
- und dass die beiden Ringe des Gelenkes an ihren Gleitflächen zusammengehalten werden über einen Verschlusszapfen, der an der freien Stirnseite des einen Ringes anschlägt und der in das hohle Innere der Drehbüchse eingelassen ist und darin über einen in einer Ringnut der Drehbüchse eingeschnappten Federring axial gesichert ist, wobei die Drehbüchse an der freien Stirnseite des anderen Ringes anschlägt.

Der Vorteil des neuen Gelenkes ist insbesondere in der vielfältigen Anwendbarkeit bei Rohrkonstruktionen zu sehen sowie darin, dass durch Anwendung von identischen, zusammenwirkenden Elementen eine kostengünstige Fertigung sowie einfache Handhabung ermöglicht wird. Es gibt keine Vertauschmöglichkeit von Links- und Rechtsteilen, von Positiv- und Negativteilen. Der über eine Verzahnung erfolgende Formschluss garantiert eine problemlose Kraftübertragung. Nicht zu vernachlässigen ist ferner die Tatsache, dass die Winkelverstellung vorgenommen werden kann, ohne dass dabei die Rohrverbindung aufgehoben ist. Es können demnach mit Hilfe dieser Art von Gelenken grosse zusammenhängende Konstruktionen vollständig in sich zusammengeklappt werden.

### Kurze Beschreibung der Zeichnung

In der Zeichnung sind mehrere Ausführungsbeispiele der Erdindung in etwa natürlicher Grösse dargestellt.

Es zeigt:

Fig. 1 ein Einzelelement im Längsschnitt

Fig. 2 ein Einzelelement in Vorderansicht

Fig. 3 einen Längsschnitt durch eine in einer gleichen Ebene schwenkbare Rohrverbindung

Fig. 4 die Vorderansicht der Verbindung nach Fig. 3 mit skizziertem Verstellbareich

Fig. 5 eine Mehrfachverbindung im Längsschnitt

Fig. 6 die Verbindung nach Fig. 5 in Seitenansicht

Fig. 7 ein Einzelelement für Sonderanwendung mit Verschlussmitteln im Längsschnitt

Fig. 8 das Element nach Fig. 7 in Vorderansicht

Fig. 9 eine Rohrverbindung mit Kabeldurchführung

Fig. 10 eine Rohrverbindung mit elektrischen
Kontakten.

In den verschiedenen Figuren sind die jeweils
gleichen Teile mit denselben Bezugszeichen versehen. Sind in einer Figur mehrere gleiche Elemente
vorhanden, so sind die Bezugszeichen der besseren Uebersichtlichkeit wegen mit Indizes versehen.

Weg zur Ausführung der Erfindung

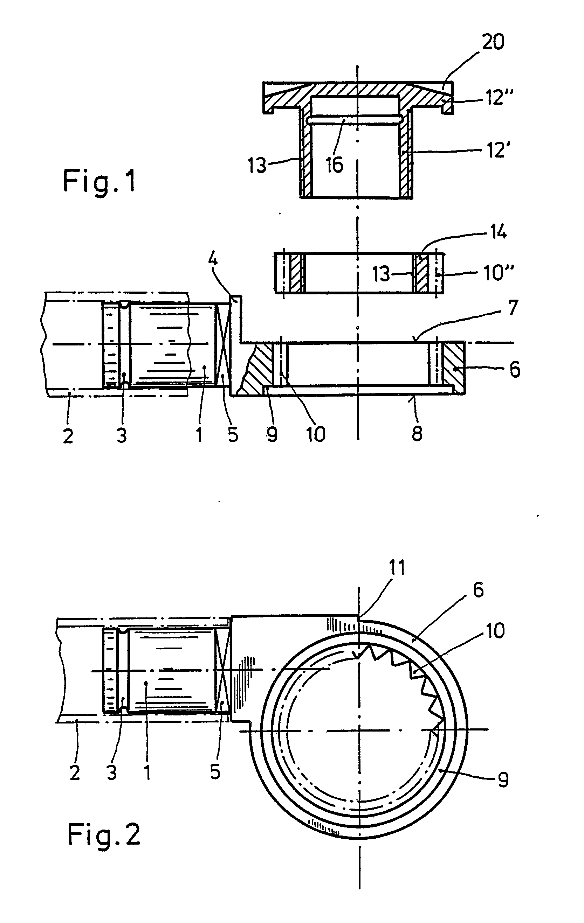

Das in den Fig. 1 und 2 gezeigte Einzelelement
kann ohne weiteres als Kunststoff-Spritzgussteil
hergestellt werden. Mit 1 ist ein zylindrischer Zapfen bezeichnet, der für das Aufschieben eines
strichliert gezeichneten Rohres 2 bestimmt ist. An
seinem freien Ende ist in den Zapfen eine Ringnut
3 eingearbeitet. Diese wird mit einem Federring
bestückt, falls der Zapfen nicht der Rohraufnahme,
sondern der später zu beschreibenden Gelenkerweiterung dient. An seinem anderen Ende bildet
der Zapfen einen Bund 4, welcher ebenfalls je nach
Verwendung einem zweifachen Zweck dient. Zum
einen bildet er eine Schulter, gegen den das aufgestülpte Rohr anschlägt. Aus diesem Grunde entspricht sein Durchmesser in etwa dem Aussendurchmesser des Rohres; zum andern dient er
genau wie der bereits erwähnte Federring zur Axialfixierung der beteiligten Elemente bei einer Gelenkerweiterung. Für letzteren Fall ist auch der unmittelbar vor dem Bund angebrachte Vierkant 5
vorgesehen, dessen Kantenlänge dem Zapfendurchmesser entspricht.

An den Bund schliesst sich ein Ring 6 an. Da
dieser Ring an einer Stirnseite bündig ist mit der
Zapfenachse und die andere Stirnseite sich an den
Aussenduchmesser des Bundes 4 orientiert, entspricht die Gesamtbreite des Ringes in etwa dem
Aussenradius des aufzusteckenden Rohres. Die
Stirnseite des Rin ges, welche sich in der gleichen
Ebene befindet wie die Längsachse des Zapfens,
bildet die eigentliche Gleitfläche 7. In die gegenüberliegende, freie Stirnseite 8 ist eine Zentrieraussparung 9 eingearbeitet. Die im Ringinnern verbleibende Fläche ist über die ganze Breite mit einer
Verzahnung 10 versehen, wobei im vorliegenden
Beispiel 24 Zähne vorgesehen sind.

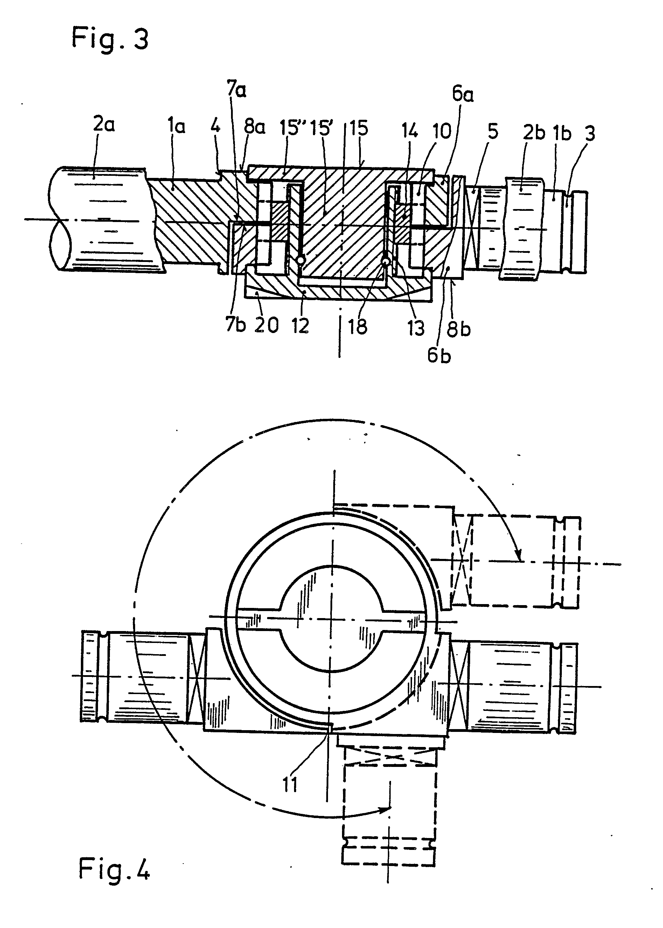

Aus Fig. 2 ist ersichtlich, dass Ringachse und Zapfenlängsachse zueinander versetzt sind; diese
nicht zwingende Massnahme hat den Vorteil, dass
anlässlich der Verbindung zweier gleichachsiger
Rohre eine durchgehende glatte Oberfläche erzielt
werden kann. Darüberhinaus kann mit dieser Massnahme der Verstellbereich gegenüber einer zentrierten Anordnung erheblich vergrössert werden.
Die Desaxierung entspricht in ihrem Mass vorzugsweise dem Radius des aufzusteckenden Rohres
erhöht um ein oder zwei Milimeter. Auf diese Weise können bei vollständig zusammengeklappter
Konstruktion die verbundenen Rohre bequem parallel nebeneinander angeordnet sein, wie dies aus
der noch zu beschreibenden Fig. 4 ersichtlich ist.

Andererseits ist auch eine Begrenzung des
Verstellbereichs möglich durch Anordnung eines
Versatzes 11 am Ringaussenumfang. Dieser Versatz bildet mit dem entsprechenden Gegenstück
eines zweiten Elementes einen Anschlag, der zum
einen eine weitere Drehung verhindert, zum andern
geeignet ist, Druckkräfte zu übertragen.

Die Fig. 3 und 4 zeigen die gelenkige Verbindung zweier Rohre 2a,2b, die jeweils auf die Zapfen 1a resp. 1b aufgesteckt sind. Die zwei verwendeten identischen Elemente sind dabei mit den
Gleitflächen 7a,7b ihrer Ringe 6a resp. 6b so zusammengefügt, dass eine gemeinsame Ringachse
entsteht, welche senkrecht zur Zapfenlängsachse
verläuft. Die Konstruktion wird nachstehend anhand
des Montagevorganges erläutert:

Eine Drehbüchse 12, bestehend aus einem
Hohlzylinder 12′ und einer mit Aussenverrippung
20 versehenen Scheibe 12″, trägt aussen am Hohlzylinder ein Schraubgewinde 13. Im vorliegenden
Beispiel ist vorgesehen, dass bei einer Büchsenverdrehung um 90° das auf dem Gewinde reitende
Gegenstück einen Hub von ca. 12mm durchläuft.
Dies entspricht in etwa der Verzahnungsbreite eines Ringes. Demzufolge wird ein dreigängiges Gewinde mit entsprechend grosser Steigung gewählt.
Im Hohlzylinder 12′ ist an der Innenfläche eine
Ringnut 16 eingearbeitet.

Auf den Gewindeteil der Büchse ist eine Verschiebemuffe 14 aufgeschraubt. Sie trägt am Aussenumfang eine Verzahnung 10′ mit ebenfalls 24
Zähnen, was anlässlich der Verstellung Stufensprünge von 360/24 = 15 Winkelgrade ergibt.

Die Drehbüchse wird mit aufgeschraubter Muffe auf der freien Stirnseite 8a eines der Ringe 6a in
das Ringinnere eingeführt, bis zum Anschlag der
Scheibe 12″ in die Zentrieraussparung 9a. Dabei ist
die Verzahnung im Eingriff. Von der Gegenseite,
d.h. von der freien Stirnseite 8b des anderen Ringes 6b wird ein Verschlusszapfen 15 in das Ringinnere eingeführt. Der Verschlusszapfen weist einen
zylindrischen Teil 15′ auf, der die gleichen Abmessungen aufweist, die zur Aufnahme der Rohre bestimmten Zapfen, d.h. er besitzt ebenfalls eine Ringnut 17. In diese Ringnut 17 ist ein Federring 18 eingesetzt. Der Verschlusszapfen greift in das Innere des Hohlzylinders der Drehbüchse ein. Der scheibenförmige Teil 15″ des Verschlusszapfens 15 wird bis zum Anschlag in die Zentrieraussparung 9b eingedrückt. Die beiden Ringnuten 16 und 17 gelangen in der Endstellung des Verschlusszapfens in eine gleiche Ebene, wodurch der Federring 18 in die Ringnut 16 einschnappt. Damit ist die axiale Fixierung der beiden Ringe 6a und 6b zueinander gegeben; zugleich ist die Drehbüchse 12 gegen Herausfallen gesichert.

Das Gelenk funktioniert nun folgendermassen:

Es wird angenommen, dass die Schiebemuffe 14 sich in der dargestellten Position befindet. Ihre Aussenverzahnung ist demzufolge mit den Innenverzahnungen beider Ringe 6a und 6b im Eingriff. Das Gelenk ist starr und vermag über den Formschluss ohne weiteres Kräfte zu übertragen. Wird nun die Drehbüchse 12 über ihre Aussenverrippung 20, welche lediglich eine Grifffunktion hat, um 90° gedreht, so gleitet die Schiebemuffe, die infolge des Zahneingriffes verdrehsicher ist, entlang des Gewindes nach links. Ihre Verzahnung gelangt dadurch in Bezug auf die Innenverzahnung des rechten Ringes 6b ausser Eingriff, da ja die Verzahnungsbreite der Muffe höchstens einer Ringbreite entspricht. Es kann nun eine neue Winkeleinstellung vorgenommen werden, wobei die Gleitflächen der Ringe gegeneinander verdreht werden. Durch Zurückdrehen der Drehbüchse um 90° verfährt die Schiebebüchse wiederum in die gezeigte Stellung und ihre Verzahnung verbindet die beiden Ringe miteinander, wodurch das Gelenk festgestellt ist.

Die Fig. 4 zeigt skizzenhaft, über welches Winkelmass das Gelenk verstellt werden kann, sofern nicht die zu Fig. 2 beschriebenen Versätze 11 die Klappbewegung über 180° hinaus behindern. Es zeigt sich auch, dass mit einer entsprechenden Konfiguration dieses Versatzes im Prinzip die Verstellwinkel beliebig begrenzt werden können.

Je nach gewünschter Anwendung kann das beschriebene Gelenk durch die Wahl der Federringstärke entweder leicht demontierbar oder ohne Hilfsmittel gar nicht demontierbar gestaltet werden.

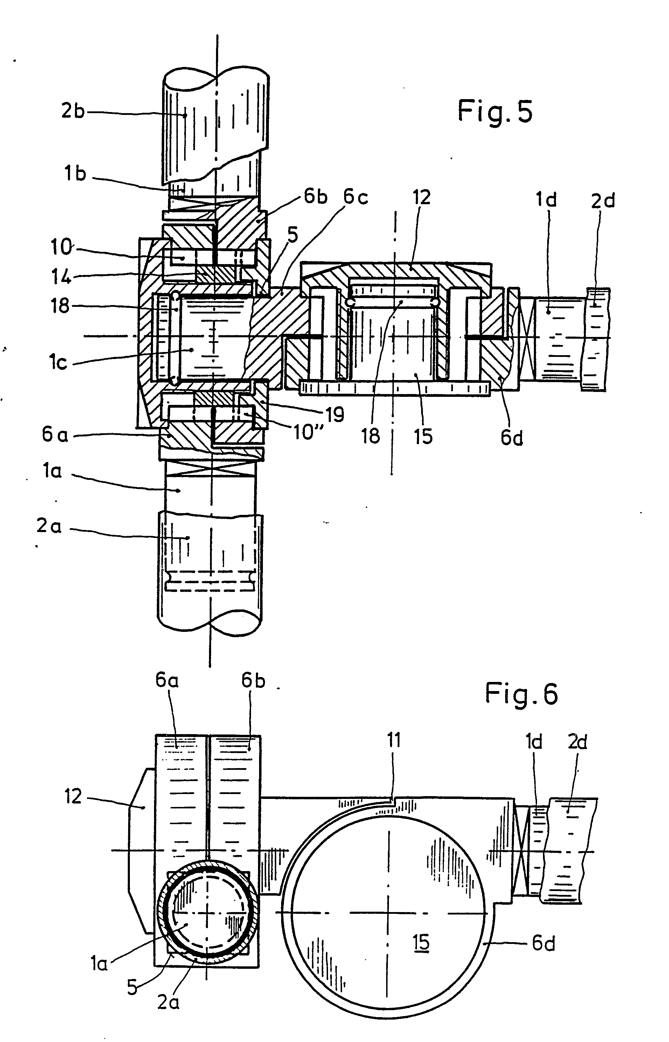

Seinen grössten Vorteil zeigt das Gelenk bei der in den Fig. 5 und 6 gezeigten Ausbildung, bei welcher drei Rohre gelenkig miteinander verbunden sind. Das dritte Rohr 2d ist dabei in einer ausserhalb der Ebene der zwei ersten Rohre 2a und 2b frei wählbaren Ebene beliebig schwenkbar und feststellbar.

Anstelle des Verschlusszapfens ist ein drittes Element mit seinem ringfederbestückten Zapfen 1c in den Hohlzylinder der Drehbüchse 12 eingeführt. Auf dem Vierkant des Zapfens sitzt eine Zwischenscheibe 19, gegen die der Bund 4c des Zapfens 1c anschlägt. Die Zwischenscheibe ihrerseits sitzt an ihrem äusseren Umfang in der Zentrieraussparung 9b ein und schützt somit das Innere des ersten Gelenks gegen das Eindringen von Fremdkörpern. Wie mit einem Verschlusszapfen sind die beteiligten Elemente aneinander geheftet.

Zur Gelenkerweiterung ist ein viertes Element mitsamt Drehbüchse und Verschlusszapfen mit dem dritten Element verbunden. Auf den Zapfen 1d jenes vierten Elementes kann das dritte Rohr 2d aufgesteckt werden.

In der gezeigten Position ist das dritte Rohr in einer Ebene schwenkbar, die senkrecht zur Ebene der beiden ersten Rohre verläuft. Es ist jedoch auch erkennbar, dass aufgrund der bisher beschriebenen Massnahmen die Ebene des dritten Rohres um volle 360° verstellt werden kann, da der Zapfen 1c des dritten Elementes in der Büchse 12 nicht gegen Verdrehen gesichert ist.

Um diese Verdrehsicherung zu bewerkstelligen, und um das dritte Rohr wie die beiden ersten Rohre mit einem 15°-Stufensprung einstellen zu können, wird auf die bereits vorhandene Ringverzahnung der beiden ersten Ringe 6a und 6b zurückgegriffen. Diese erstreckt sich wie beschrieben über die ganze lichte Breite der Ringe. Bisher wurde diese Breite jedoch nur zur Hälfte genützt, da die Verzahnung auf der Verschiebemuffe nur die Breite eines Ringes aufweist. Wenn die Muffe also mit beiden Ringen gleichzeitig im Eingriff steht, stehen die beiden nach aussen gekehrten Verzahnungshälften der beiden Ringe zur freien Verfügung. Anlässlich der Verdrehung der Drehbüchse wird die ganze Verzahnung des die Drehbüchse aufnehmenden Ringes jedoch von der Muffenverzahnung eingenommen. Ueberhaupt keine Funktion hatte bisher der aussenliegende Verzahnungsteil jenes Ringes, gegen den der dritte Zapfen über die Zwischenscheibe 19 anschlägt. Dieser Verzahnungsteil wird jetzt zur Verdrehsicherung des dritten Zapfens herangezogen. Dazu wird die Zwischenscheibe 19 an ihrer der freien Stirnseite 8b des zweiten Ringes 6b zugekehrten Seite mit einer entsprechenden Verzahnung 10″ versehen. Beim Einführen des Zapfens 1c gelangt diese Verzahnung 10″ nunmehr mit dem bisher unbenutzten Teil der Ringverzahnung 10 in Eingriff. Die Zwischenscheibe 19 ist jetzt verdrehfest, und über ihre Vierkantverbindung mit dem Zapfen 1c ist auch dieser festgestellt.

Nach alldem ist erkennbar, dass mit lediglich drei Montageeinheiten - d.h. Elementen, bestückten Drehbüchsen und Zwischenscheiben - jede beliebige Art von gelenkigen Rohrverbindungen geschaffen werden kann. Auf den Verschlusszapfen kann notfalls verzichtet werden, da ein Element zusammen mit einer Zwischenscheibe die gleiche Funktion erfüllen kann. Auch bei einer gewünschten bleibenden Drehbarkeit des dritten Rohres muss lediglich die Zwischenscheibe anders herum montiert werden, d.h. so auf den Vierkant gesteckt sein, dass seine Verzahnung freiliegt.

Es versteht sich, dass die Materialwahl je nach Anwendung beliebig sein kann. Sämtliche Teile können auf kostengünstige Art im Spritzgussverfahren hergestellt werden.

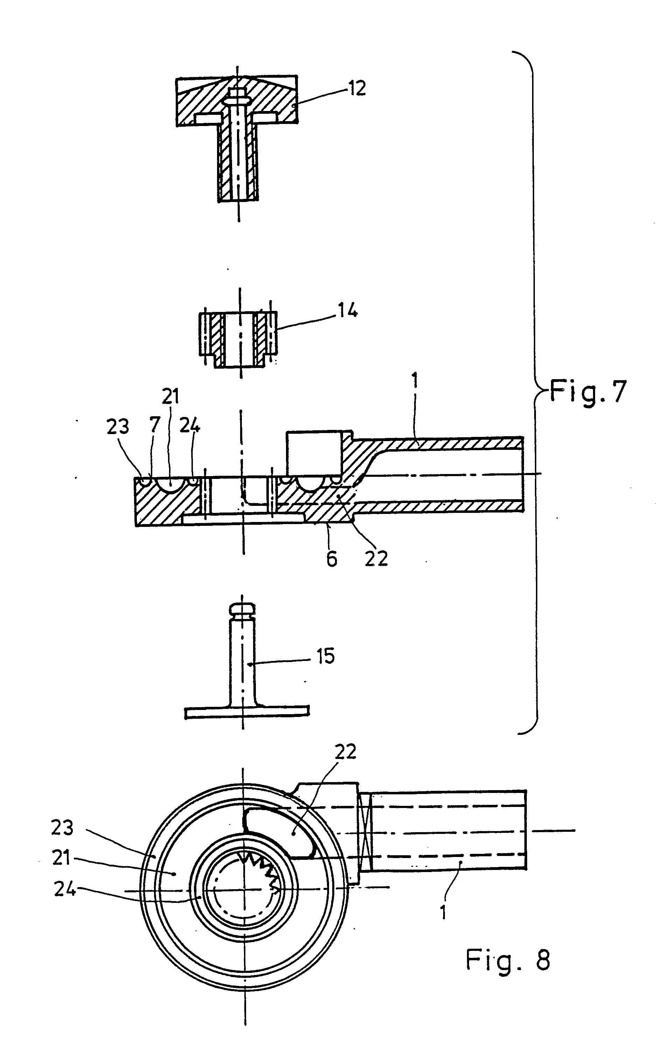

Die in Fig. 7 und 8 gezeigte Elementenkombination eignet sich als einstellbarer Gelenkbogen in einem Rohrsystem, in dem flüssige oder gasförmige Medien gefördert werden. Es ist zu erkennen, dass gegenüber den bisher beschriebenen Gelenken die aktiven Teile der Verschluss- und Verstellelemente, d.h. Drehbüchse 12, Schiebemuffe 14 und Verschlusszapfen 15 in ihren Dimensionen kleiner bemessen sind. Bei sonst gleichen Aussenabmessungen des Gelenkes ist es dadurch möglich, die Gleitflächen 7 in ihrer radialen Erstreckung grösser zu bemessen. In diese Gleitflächen 7a,7b ist eine Ringnut 21 eingelassen. Zusammen mit der entsprechenden Ringnut der jeweils anderen Gelenkhälfte wird somit ein durchströmbarer Ringraum gebildet. Die Ringnut kommuniziert mit dem hohl ausgebildeten Zapfeninnern über einen Kanal 22. Beidseitig der Ringnut 21 sind zwecks Abdichtung Dichtnuten 23,24 vorgesehen, in die anlässlich der Gelenkmontage Dichtringe, beispielsweise gummielastische O-Ringe eingelegt werden.

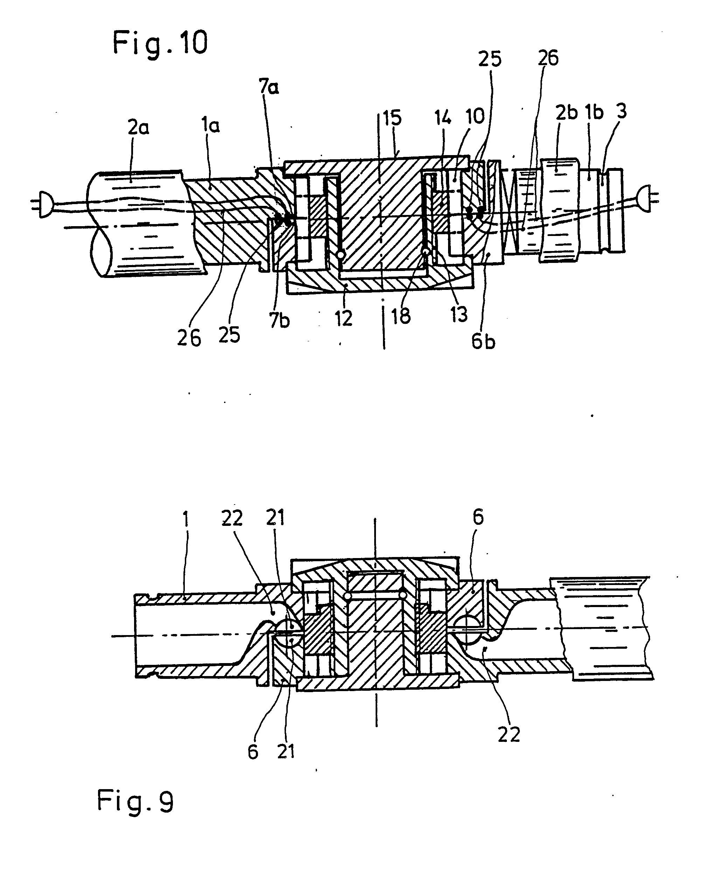

Die Fig. 9 zeigt eine Gelenkanordnung, bei welcher durch die hohlen Zapfen 1 und durch die entsprechend konfigurierten Kanäle 22 in den Ringen 6 ein elektrisches Kabel, ein von einem Medium durchströmter Schlauch, ein Lichtleiter oder dergleichen durchgelegt werden soll. Hierzu ist in den Gleichflächen 7 der beiden Ringe 6 ebenfalls je eine halbkreisförmige Ringnut 21 angeordnet.

Die Fig. 10 schliesslich zeigt eine Anordnung, bei welcher in die Gleitfläche 7 eines jeden Ringes 6 mindestens zwei Kontaktringe 25 eingelegt sind. Im montierten Zustand des Gelenkes bilden diese Ringe 25 Schleifkontakte. Aus nicht näher dargestellte Art sind die Ringe mit Drähten 26 verbunden, welche durch die freie Stirnseite des jeweiligen zylindrischen Zapfens 1 aus dem Gelenk herausgeführt sind.

## Ansprüche

1. Feststellbares Gelenk für die Verbindung von Rohren, im wesentlichen bestehend aus zwei mit Gleitflächen aneinanderliegenden Elementen,
- wobei jedes Element einen zylindrischen Zapfen (1) zur Aufnahme eines Rohres (2) sowie einen Ring (6) mit Innenverzahnung (10) aufweist,
- und wobei in das Innere der beiden Ringe (6a,6b) eine Schiebemuffe (14) eingeführt ist, die mit einer Aussenverzahnung (10′) versehen ist,
- welche Aussenverzahnung (10′) je nach axialer Stellung der Schiebemuffe (14) mit der Innenverzahnung (10) eines Ringes (6a) oder mit jener beider Ringe (6a,6b) im Eingriff steht,
dadurch gekennzeichnet,
- dass die beiden Elemente identische Bauteile sind,
- dass die Schiebemuffe (14) mittels eines Gewindes (13) auf einer Drehbüchse (12) verstellbar aufgezogen ist,
- und dass die beiden Ringe (6a,6b) des Gelenkes an ihren Gleitflächen (7a,7b) zusammengehalten werden über einen Verschlusszapfen (15), der an der freien Stirnseite (8b) des einen Ringes (6b) anschlägt und der in das hohle Innere der Drehbüchse (12) eingelassen ist und darin über einen in einer Ringnut (16) der Drehbüchse eingeschnappten Federring (18) axial gesichert ist, wobei die Drehbüchse (12) an der freien Stirnseite (8a) des anderen Ringes (6a) anschlägt.

2. Gelenk nach Anspruch 1, dadurch gekennzeichnet, dass die Breite der Aussenverzahnung (10′) auf der Schiebemuffe (14) höchstens der Breite der Innenverzahnung (10) eines Ringes entspricht.

3. Gelenk nach Anspruch 1, dadurch gekennzeichnet, dass die Längsachse des Zapfens (1) und die als Gleitfläche (7) ausgebildete Stirnseite des Ringes (6) in einer gemeinsamen Ebene liegen.

4. Gelenk nach Anspruch 1, dadurch gekennzeichnet, dass der zylindrische Zapfen (1) des Elementes hohl ist und über einen Kanal (22) im Ring (6) mit einer in der Gleitfläche (7) des Ringes vorgesehenen Ringnut (21) kommuniziert.

5. Gelenk nach Anspruch 4, dadurch gekennzeichnet, dass in der Gleitfläche (7) beidseitig der Ringnut (21) eine Dichtnut (23,24) angeordnet ist, in der beispielsweise ein Dichtring einlegbar ist.

6. Gelenk nach Anspruch 1, dadurch gekennzeichnet, dass in die Gleitfläche (7) eines jeden Ringes mindestens zwei Kontaktringe (25) eingelegt sind, und dass an den Kontaktringen (25) befestigte Drähte (26) durch den Zapfen (1) hindurch nach aussen geführt sind.

7. Gelenk nach Anspruch 1, dadurch gekennzeichnet, dass das Gewinde (13) auf Drehbüchse (12) und Schiebemuffe (14) ein dreigängiges Gewinde mit grosser Steigung ist.

8. Gelenk nach Anspruch 1, dadurch gekennzeichnet, dass die Verzahnungen (10′,10) von Schiebemuffe (14) und Ringen (6a,6b) jeweils 24 Zähne umfassen, was eine 15°-Drehstufung ergibt.

9. Gelenk nach Anspruch 1, dadurch gekennzeichnet, dass bei Anwendung des Gelenkes für drei zu verbindende Rohre (2a,2b,2d) statt des Verschlusszapfens (15) ein drittes Element unmittelbar mit dem Gelenk verbunden ist, wozu sein zylindrischer Zapfen (1c) an der freien Stirnseite (8b) jenes zweiten Ringes (6b) anschlägt, der mit dem ersten, die Drehbüchse (12) aufnehmenden Ring (6a) ein Paar bildet, und wobei der zylindrische Zapfen (1c) des dritten Elementes in das hohle Innere der Drehbüchse (12) eingelassen ist, und darin über einen in einer Ringnut (16) der Drehbüchse (12) eingeschnappten Federring (18) axial gesichert ist, und dass schliesslich ein viertes Element mitsamt Drehbüchse und zugehöriger Axialarretierung mit dem dritten Element in Wirkverbindung ist, wobei der freie zylindrische Zapfen (1c) des vierten Elementes das dritte Rohr (2d) aufnimmt.

10. Gelenk nach Anspruch 9, dadurch gekennzeichnet, dass der Anschlag des Zapfens (1c) des dritten Elementes an der freien Stirnfläche (8b) des zweiten Elementes mittelbar erfolgt über eine Zwischenscheibe (19), die auf dem Zapfen (1c) aufgezogen ist, und den Ringinnenraum der ersten und zweiten Elemente nach aussen abdeckt.

11. Gelenk nach Anspruch 10, dadurch gekennzeichnet, dass die Zwischenscheibe (19) mit einem Vierkantloch auf eine entsprechende Vierkantfläche (5) des Zapfens (1c) aufgezogen ist und dass sie zur Verdrehsicherung dieses Zapfens an ihrer der freien Stirnfläche (8b) des zweiten Ringes (6b) zugekehrten Seitenfläche eine Verzahnung (10″) trägt, die in die Ringverzahnung (10) des zweiten Elementes eingreift.

12. Gelenk nach einem der Ansprüche 1, 9 oder 10, dadurch gekennzeichnet, dass die freien Stirnflächen (8) der Ringe (6) mit einer Zentrieraussparung (9) versehen sind, in die entweder die Drehbüchsen (12), die Verschlusszapfen (15) oder die Zwischenscheiben (19) eingreifen.

Fig.1

Fig.2

88/300

Fig. 3

Fig.4

Fig.5

Fig.6

Fig. 7

Fig. 8

Fig.10

Fig.9

Europäisches Patentamt

**EUROPÄISCHER RECHERCHENBERICHT**

Nummer der Anmeldung

EP 88 11 4419

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A- 911 129 (A. CUISINIER) <br> * Figuren 9,10,11; Seite 3, Zeilen 9-47 * | 1,2,3,8 | F 16 C 11/10 |
| A | GB-A- 924 200 (A. WARN) <br> * Figuren 1,2,5; Seite 1, Zeilen 39-61; Seite 3, Zeilen 26-42 * | 1,2 | |
| A,D | DE-A-2 658 838 (F. RUSCHITZKA HOLZ- UND METALLWARENFABRIK) <br> * Figuren; Seite 4, Abschnitte 2,3 * | 1,2,8 | |
| A,D | US-A-4 582 445 (J. WARSHAWSKY) <br> * Zusammenfassung; Spalte 3, Zeile 60 - Spalte 4, Zeile 57; Figuren 2,3,4 * | 1,3,12 | |
| A | FR-A-2 392 268 (MULLCA S.A.) <br> * Seite 2, Zeile 36 - Seite 3, Zeile 5; Figuren 1,2 * | 1,3 | |
| A | DE-A-3 128 434 (ELTEBA AG) <br> * Fiuren 1-4; Seite 7, Zeile 27 - Seite 8, Zeile 2 * | 1,3,4 | RECHERCHIERTE SACHGEBIETE (Int. Cl.4) |
| A | CH-A- 407 667 (TANNER) <br> * Figuren 1,3-5 * | 4 | F 16 C <br> A 47 C <br> E 05 D <br> F 16 D <br> F 16 H |
| A | DE-C- 99 349 (P. SCHMITT) <br> * Figur 1 * | 7 | |
| A | GB-A-2 026 121 (BLACKS OF GREENOCK LTD) | 7 | |

Der vorliegende Recherchenbericht wurde für alle Patentansprüche erstellt

| Recherchenort | Abschlußdatum der Recherche | Prüfer |
|---|---|---|
| DEN HAAG | 02-12-1988 | GUTHMULLER J.A.H. |